# EUROPEAN PATENT SPECIFICATION

(11) **EP 1 218 272 B1**
(45) Date of publication and mention of the grant of the patent: **21.04.2004**
(21) Application number: 00970377.8
(22) Date of filing: 28.09.2000
(51) Int. Cl.: B65H 29/51, B65H 5/02, B65G 15/14, G07D 11/00

(54) **DEVICE FOR STORING FLEXIBLE SHEET MATERIAL**
VORRICHTUNG ZUM SPEICHERN VON FLEXIBLEM BLATTMATERIAL
DISPOSITIF DE STOCKAGE DE MATERIAU EN FEUILLE SOUPLE

(30) Priority: 04.10.1999 SE 9903566
(43) Date of publication of application: 03.07.2002
(73) Proprietor: Cashguard AB, 183 62 Täby (SE)
(72) Inventor: HELLQVIST, Patrik, S-184 70 Akersberga (SE)
(74) Representative: Stein, Jan Anders Lennart
(86) International application number: PCT/SE2000/001878
(87) International publication number: WO 2001/025127

(56) References cited:
- WO-A1-96/15511
- FR-A1- 2 268 723
- GB-A- 2 134 493
- US-A- 4 249 552
- US-A- 4 373 712
- US-A- 5 622 027

## Description

The present invention relates to a device for storing flexible sheet-like articles, which device comprises a storage reel for storing the flexible articles, buffer means for receiving feeder means, which feeder means are arranged between the storage reel and the buffer means and can be rolled up on these, and at least one guide member arranged on the feeder means for guiding the flexible articles in.

Banknote feeders, more generally referred to as banknote cassettes, are used inter alia in systems for automatic handling of banknotes. The banknote cassettes are used for example in cash exchangers or in other cash systems. Examples of areas of application of such cash systems are found in commerce and in retail operations. These cash systems provide cashier staff and customers with a more reliable and faster way of handling coins and notes. The cassettes can be removed from or connected to so-called cash cabinets which are placed, for example, at the shop's cash point. The banknote cassettes often comprise feeder bands, or banknote bands, which together with the banknotes are rolled up on reels inside the cassettes and are unrolled from these. Reference can be made, for example, to US 4249552 which discloses an automatic money handling device according to the preamble of claim 1.

The feeder bands presently consist of an upper band and a lower band which are rolled up on respective buffer reels. The two bands drive the banknotes into the device and are rolled up on a storage reel. This means that the upper band and lower band encapsulate the banknotes, meaning that a winding turn around the storage reel has a thickness corresponding to two band thicknesses and the thickness of the banknote.

A document GB 2 134 493 discloses a device for storing flexible sheets, which device comprises a storage reel, an outer and an inner feeder band for being sandwiched the sheets between the both feeder bands.

A document US 4 373 712 discloses an apparatus comprising a number of endless feeder bands for transportation of sheets, which apparatus is not adapted for storing sheets.

Thus, known banknote cassettes generally suffer from the disadvantage that they are heavy and take up a lot of space. It is desirable for the cash cabinets with the banknote cassette placed at the cash point, for example in a shop, to take up as little space as possible and at the same time be able to hold as many banknotes as possible. It would also be desirable for the banknote cassette to be able to hold more banknotes than the cassettes presently available on the market, while at the same time taking up less space.

It is further desirable to be able to reduce the number of drive motors in the banknote cassette according to the prior art, as operational reliability can be increased in this way. At present a number of motors are often used for the different buffer and storage reels. For reasons of space, these are also arranged in a complex construction, which involves high assembly costs. The operation of the motors is likewise complicated, since the various reels must have different speeds depending on the volume of the rolled-up feeder bands on such reels.

It is also desirable for banknotes to be able to be transferred for example to a collect box without becoming caught between the collect box and the banknote cassette.

The banknote cassette according to the prior art takes a long time to assemble, because assembly of the drive motors is time-consuming. This entails higher production costs for the banknote cassettes.

Banknotes which have been stored in a banknote cassette according to the prior art have a tendency to roll up, which among other things makes it difficult to pack the banknotes in bundles.

Likewise, banknotes which have been stored in a banknote cassette according to the prior art are often charged with static electricity. This is because the feeder bands in known banknote cassettes come to touch each other where they meet at an entry/exit device for the banknotes. The electrically charged banknotes are awkward to handle when they are freed outside the banknote cassette.

Likewise, the feeder bands in these banknote cassettes are described as being made of a transparent material, since the value of the banknotes is read off after said banknotes have been conveyed into the banknote cassette between the upper and lower bands. This transparent material for manufacture of feeder bands for banknote cassettes is likewise an expensive material.

The main object of the invention is to make available a banknote cassette which weighs less and takes up less space than the banknote cassettes available today. It is also an object of the invention to make available a banknote cassette which, while having the same volume, can accommodate more banknotes than the banknote cassettes available today.

Another object of the invention is to make available a banknote cassette with a reduced number of drive motors, in order thereby to reduce the weight and outer dimensions of the banknote cassette, increase the operational reliability and reduce manufacturing costs for such cassettes.

The invention also aims to ensure that the banknotes, in their freed position outside the cassette, do not roll up on themselves or curl.

It is also an aim of the invention to make available a banknote cassette which does not cause static electricity of the banknotes.

The invention moreover aims to make available a banknote cassette comprising nontransparent feeder bands, in which cassette it is nevertheless possible to visually or otherwise scan the banknotes.

The problems mentioned above are solved by means of a banknote cassette, of the type mentioned in the introduction, in which the feeder means comprise at least three feeder bands. In this way, an intermediate feeder band can constitute a support against one side of the introduced banknote, while two outer feeder bands constitute a support against the other side of the banknote. By this means, the feeder bands can be arranged alongside each other on the storage reel, where the two outer feeder bands, corresponding to the function of the upper band, enclose the two outer areas of the upper face of the banknote and the central feeder band, corresponding to the function of the lower band, takes up the central area of the lower face of the banknote. Since the three feeder bands are rolled up substantially in line with each other on the storage reel, and the banknote is taken up within the area of this line, a band thickness is eliminated for each rolled-up turn. The weight and dimensions of the banknote cassette can thus be reduced. Likewise, a groove is formed on the banknote by means of this solution, which groove ensures that the banknote does not roll up in a freed position. The two outer feeder bands can equally well perform the function of the lower band and the central feeder band can perform the function of the upper band.

The buffer means, that is to say the member or members which take up that part of the feeder bands/feeder band which is to be stored on the reel without enclosing any banknotes, advantageously comprises at least one buffer reel.

In this way, the number of buffer reels can be reduced to one, which results in a less bulky banknote cassette. In other words, the three feeder bands can be rolled up alongside each other on one buffer reel. The weight and dimension of the banknote cassette can thus be reduced.

A first feeder band is advantageously diverted away from the other feeder bands and then returned to them at the guide member.

The expression first feeder band here signifies an inner feeder band, and the expression other feeder bands thus signifies the outer feeder bands. On being reeled off from the buffer reel, the outer feeder bands can in this way be diverted away from the central feeder band in such a way that the outer feeder bands at the guide member meet up with the central feeder band substantially in the direction towards the direction of movement of this central feeder band. At the guide member, the outer feeder bands and the central feeder band are arranged to interact in such a way that the introduced banknote can be received by the feeder bands and rolled up on the storage reel.

The feeder bands are expediently separated from each other on the storage reel, at a distance from each other in a direction parallel with the axis of rotation of the storage reel.

A scanning device can thus read off, for example, the values of the banknotes in the area between the feeder bands. The resulting distance between the feeder bands likewise means that the groove formed on the banknote does not have sharp folds and that the groove on the banknote has an even contour. This also means that the feeder bands are able to a greater extent to lie in line with each other, which saves space.

The guide member preferably comprises two substantially parallel guide reels which are arranged substantially parallel with the axis of rotation of the storage reel.

In this way, the feeder bands can be deflected in such a way that they reach the storage reel without warping or twisting. The guide reels also guide the introduced banknote in between the feeder bands.

A first drive motor is expediently arranged on the storage reel, and a second drive motor is arranged on the at least one buffer reel.

In this way, the storage and buffer reels, respectively, can be driven by independent drive devices. The speeds of the storage and buffer reel/ reels, respectively, can therefore be controlled independently, which is advantageous since the speeds of the storage and buffer reels differ depending on the number of rolled-up turns on the respective reel. Since the buffer reel according to the invention can be one in number and thus only one drive motor is needed, this reduces the number of drive motors compared with the prior art. Several buffer reels can also be arranged for taking up the feeder band, as will be described below. Although this entails more moving parts, it can also bring advantages in terms of the design of the banknote cassette.

The guide member is preferably arranged to receive two outer and substantially parallel guide cylinders, substantially parallel with and outside the guide reels and the banknote cassette.

In this way, an external unit, for example a collect box, can be coupled to the banknote cassette and its guide member. This means that the two guide cylinders can be included in a dispensing device of a collect box. When the collect box is coupled to the banknote cassette, the guide member of the banknote cassette takes up the guide cylinders of the external unit.

The guide cylinders and the outer guide reels are advantageously designed with tracks running round their axes of rotation, which tracks are placed in an area which is not covered by the feeder bands. Guide elements are expediently arranged in these tracks of the guide reels. The guide elements advantageously extend in the principal longitudinal direction of the feeder means and are arranged in a position such that they reach the tracks of the guide cylinders for example in a collect box upon coupling of the latter to the banknote cassette.

In this way, banknotes are guided in and out of the guide member without any risk of the banknote being diverted off between a guide reel and a guide cylinder. This eliminates the risk of banknotes becoming caught in the guide member.

The invention will be described in greater detail below on the basis of illustrative embodiments and with reference to the attached figures, where:
Fig. 1 shows a diagrammatic perspective view of a device according to the invention in a first illustrative embodiment,
Fig. 2 shows a diagrammatic side view of the device according to the invention in the first illustrative embodiment,
Fig. 3 shows a diagrammatic side view of a detailed enlargement of a guide member according to the invention, and
Fig. 4 shows a diagrammatic perspective view of a device according to the invention in a second illustrative embodiment.

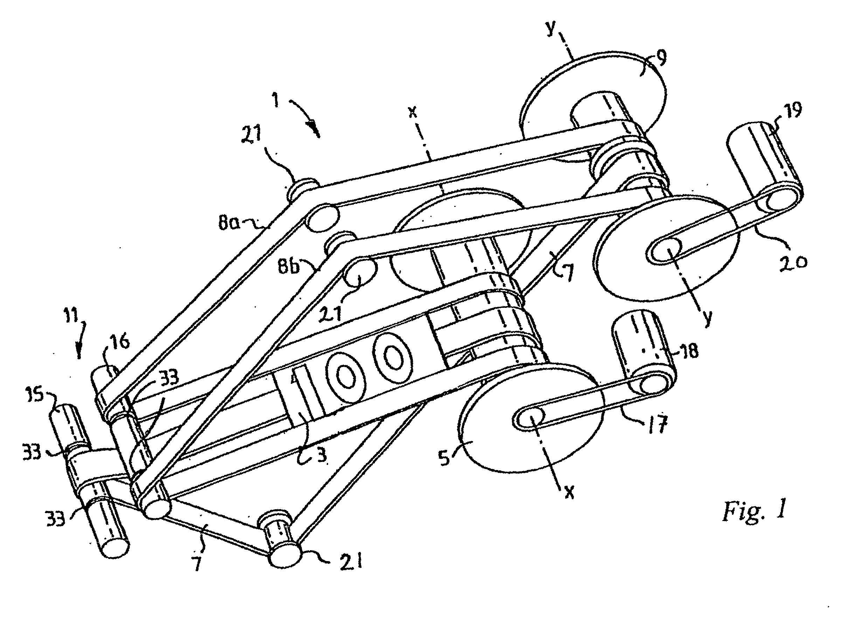

The invention will be described in greater detail below on the basis of an illustrative embodiment and with reference to the attached figures, in which Fig. 1 shows a device for storing flexible sheet material 3. The device is more generally designated as a banknote cassette. In order to make clear the function of the banknote cassette, parts which are not essential to the invention are not shown in the figures. Reference numbers shown in one figure may appear again in another figure.

Fig. 1 shows the device 1 with the parts essential to the invention, that is to say a banknote cassette for receiving flexible sheet material 3 such as banknotes, etc. The words upper and lower relate to the situation illustrated in the figure. Thus, the upper face of the banknote 3 is visible in the figure, whereas the lower face of the banknote 3 is not visible in the figure.

The banknote 3 is rolled up for storage on a storage reel 5 with the aid of three feeder bands 7, 8a and 8b shown in this illustrative embodiment. For the sake of clarity, the feeder bands 7, 8a and 8b are shown diagrammatically, rolled up on the storage reel 5. The storage reel 5 can rotate about its centre axis X-X and is driven with the aid of a first drive motor 18 via a drive band 17. The feeder bands 7, 8a, 8b can be rolled up on the storage reel 5 alongside each other and in line with each other.

The two outer feeder bands 8a and 8b are arranged at a distance from the intermediate feeder band 7. This is so that the groove (not shown) on the banknote 3 will not be given sharp folds and the feeder bands 7, 8a and 8b are to a greater extent able to lie in line with each other, which saves space. In addition, this distance means that it is possible to read off the values, etc, of the banknotes without the feeder bands 7, 8a and 8b needing to be transparent. The feeder bands 7, 8a and 8b can be made of metal. Of course, other materials can also be used for the feeder bands.

When the banknote 3 or banknotes (for reasons of clarity, only one banknote is shown in the figure) are rolled up on the storage reel 5, the two outer feeder bands 8a, 8b support the upper outer areas of the banknote 3, and the intermediate feeder band 7 supports the central area of the lower face of the banknote 3. In the rolled-up position of the banknote, the three feeder bands 7, 8a and 8b are arranged substantially in line with each other on the storage reel 5 and a groove is formed on the banknote 3. In this way, the feeder bands 7, 8a and 8b fix the banknote 3 on the storage reel 5. In contrast to traditional storage reels, where an upper band and a lower band completely enclose and fix the banknote and thus produce a double feeder band thickness for each reel turn, the present invention means that each reel turn corresponds to the thickness of a single feeder band.

A buffer reel 9 is also arranged on the device 1, here called the banknote cassette. This buffer reel 9 can rotate about its centre axis Y-Y and is driven by a second drive motor 19 with the aid of a drive band 20. The three feeder bands 7, 8a and 8b are arranged on the buffer reel 9 alongside each other and at a distance from each other seen in the Y-Y direction of the centre axis. To save more space, the feeder bands 7, 8a and 8b can advantageously be rolled up closely adjacent to each other on the buffer reel 9. As the three feeder bands 7, 8a and 8b lie in line with each other on the buffer reel 9, rolling on the latter saves space. In contrast to the prior art, only one buffer reel is needed for the various feeder bands.

From the buffer reel 9, the outer feeder bands 8a and 8b are diverted away from the intermediate feeder band 7 in the direction of movement with the aid of support rollers 21. In this way, the three feeder bands 7, 8a and 8b can meet at a guide member 11, shown diagrammatically in Figure 1, in a direction towards each other.

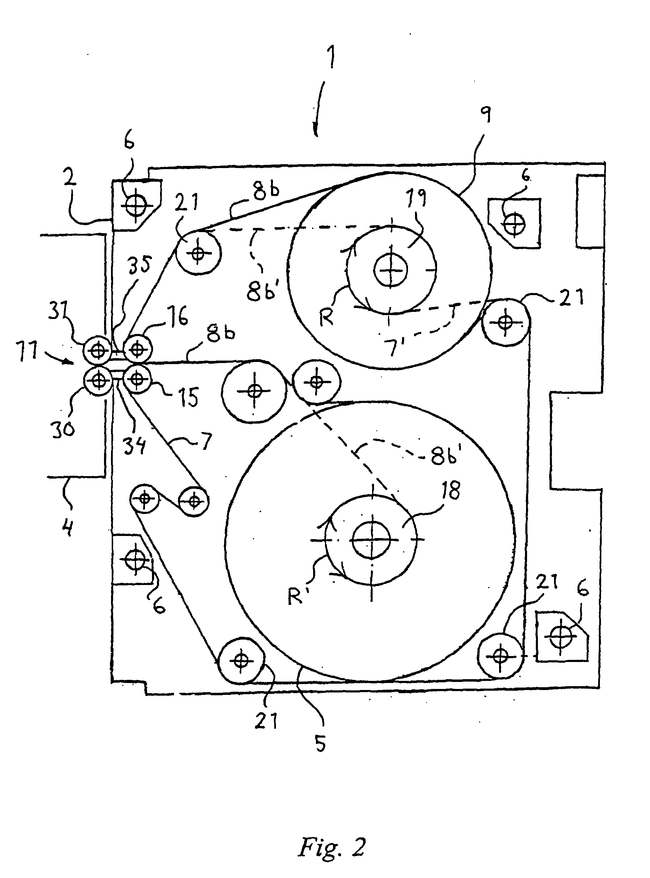

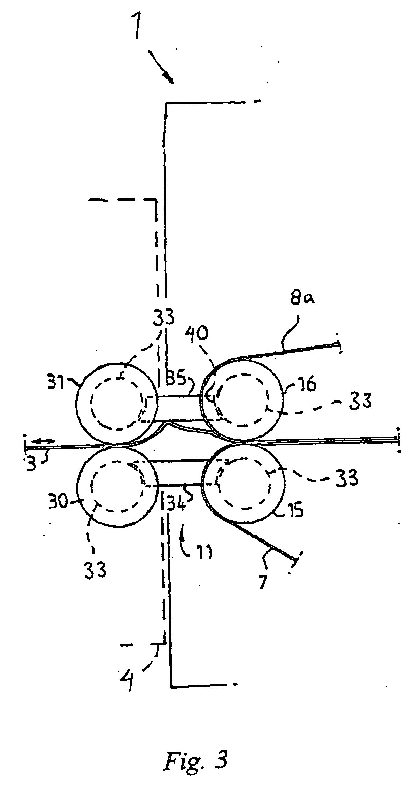

The feeder bands 7, 8a and 8b are deflected via two parallel guide reels 15 and 16 to or from the storage reel 5. On each guide reel, two tracks 33 have been formed within the areas which are not covered by the feeder means. These tracks cooperate with four guide elements (34 and 35, shown in Figures 2 and 3) and two guide cylinders 30 and 31 (shown in Figures 2 and 3) so as to eliminate the risk of the banknote 3, during passage through the guide member 11, turning off between the guide reels 15 and 16 and the guide cylinders 30 and 31. The guide member 11 will be described in more detail below.

Fig. 2 shows a diagrammatic side view of the device 1 according to the invention. This device is obtained using a feeder band arrangement illustrated in more detail than in Fig. 1. Fig. 2 also shows part of a collect box 4 which is coupled to the banknote cassette. However, the principle is the same as that described in Fig. 1. The references shown in Fig. 1 correspond to the references shown in Fig. 2, except for the positions of the various members and means.

A wall 2 represents the wall of the banknote cassette. A side wall (not shown) can be mounted on the cassette with screws (not shown) in screw holes 6. It can be clearly seen how the storage reel 5 and the buffer reel 9 are arranged in the banknote cassette. The feeder bands 7 and 8b are illustrated by solid lines. Since one outer feeder band 8a is concealed by the other outer feeder band 8b, it is not indicated by any reference number. Broken lines indicate the feeder bands 7 and 8b not fully rolled-up on the storage and buffer reels 5 and 9. In this position, the feeder bands are designated by 7' and 8b'. Since the central feeder band 7 in Fig. 2 is hidden behind feeder band 8b in its extent from the guide member 11 to the storage reel 5, the feeder means is indicated here by 8b and 8b' (that is to say the outer feeder band 8b visible in Fig. 2).

Deflection rollers 21 provide for deflection of the feeder bands 7, 8a and 8b. In contrast to the arrangement in Fig. 1, the drive motors 18 and 19 shown in Fig. 2 are arranged inside the respective reel, and no drive transmission with drive bands etc. need be used. The drive motors 18 and 19 effect rotation of the storage and buffer reels 5 and 9. This rotation is designated by R and R', respectively, for the respective reels and can vary in both directions of rotation.

The guide member 11 comprises two parallel guide reels 15 and 16 and guide elements 34 and 35. The feeder bands 7, 8a and 8b are deflected to or from the storage reel 5. Two guide cylinders 30 and 31 are included in the collect box 4. On each guide reel and guide cylinder there are two tracks 33 produced in those areas of the guide reels in the position which is not covered by the feeder means. That is to say between the feeder bands, viewed in the directions of the guide reels 15 and 16 and of the guide cylinders 30 and 31, parallel with their axes. The tracks 33 are thus of circular configuration around each respective guide cylinder 30 and 31 and guide reel 15 and 16 in a position between the feeder bands 7, 8a and 8b. The guide member 11 will be described in greater detail below in Fig. 3.

Fig. 3 shows a diagrammatic side view of a detailed enlargement of a guide member 11 of the device according to the invention coupled to a collect box 4. The above-described tracks 33 cooperate with four guide elements 34 and 35 (only 2 guide elements are shown in the figure) in order to eliminate the risk of the banknote 3, during passage through the guide member 11, turning off between the guide reels 15 and 16 and the guide cylinders 30 and 31 in the position where the collect box 4 is coupled to the banknote cassette. Each guide member 34 and 35 is arranged to reach between the guide reels 15 and 16 and the guide cylinders 30 and 31.

The guide elements 34 and 35 are mounted in the device, for example securely screwed to the guide member 11, so that these do not come into contact with the guide reels 15 and 16 and the guide cylinders 30 and 31. Since the guide elements are arranged with their end sections 40 (only one end section is shown in Fig. 3) in corresponding tracks 33, the banknote 3 cannot pass between the guide reels 15 and 16 and the guide cylinders 30 and 31.

The guide reels 15 and 16 and the guide cylinders 30 and 31 are freely rotatable about their axes, which are substantially parallel with the axes (X-X and Y-Y shown in Fig. 1) of the storage reel 5 and buffer reel 9, respectively. The guide cylinders 30 and 31 can also be arranged to rotate with inertia on the guide member in order to generate an inertia on introduction and dispensing of the banknote 3 to and from the device 1, that is to say the banknote cassette.

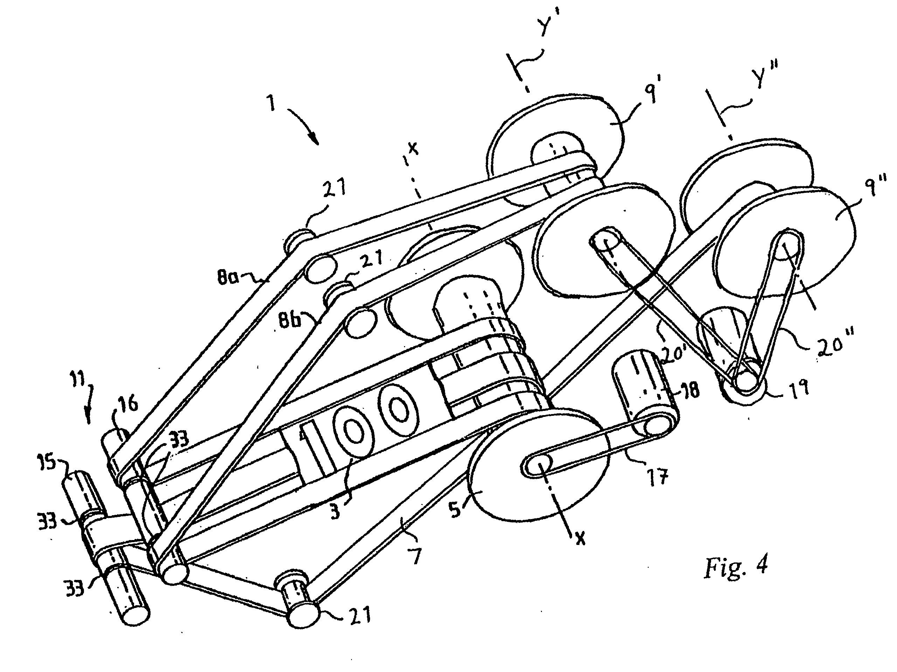

Fig. 4 shows a diagrammatic perspective view of a device according to the invention in a second illustrative embodiment. The references in this figure correspond to the means and elements shown in Fig. 1.

According to this illustrative embodiment, two buffer reels 9' and 9" receive the feeder bands 7, 8a and 8b. These buffer reels 9' and 9" are driven by a drive motor 19 via the feeder bands 20' and 20". In this way, the buffer can be provided in a narrow format, where the feeder means can be arranged in line and thus take up less space in width. This design also makes it possible to guide the two buffer reels 9' and 9" with separate guidance, either by means of a gear mechanism (not shown) or by separate drive motors (not shown).

A further embodiment according to the invention involves configuring the feeder means as five feeder bands (not shown in any of the figures). That is to say, outer feeder bands and a central feeder band can for example form a lower feeder band and the two intermediate feeder bands can form an upper band. Four reinforcing grooves are formed on the banknote according to this embodiment. These grooves generate a further stiffening of the banknote. Likewise, the central feeder band for example can be transparent, while the other bands can be made of metal. In this way, it is possible to reduce costs, as transparent bands are expensive to manufacture. At the same time, it is possible to scan through the transparent central feeder band, and the distances between the bands can be reduced and the feeder bands can be rolled up close to each other on the buffer reel and storage reel. In this way, it is possible to further reduce the size of the banknote cassette.

## Claims

1. Device for storing flexible sheet-like articles (3), which device (1) comprises a storage reel (5) for storing the flexible articles (3); buffer means (9) for receiving feeder bands (7, 8a), which feeder bands (7, 8a) are arranged between the storage reel (5) and the buffer means (9) and can be rolled up on these; and at least one guide member (11) arranged on the feeder bands (7, 8a), for guiding the flexible articles (3) in, **characterized in that** it comprises at least three feeder bands (7, 8a, 8b), the buffer means comprise at least one buffer reel (9), and that at least a first feeder band (7) is diverted away from the other second feeder bands (8a, 8b) and these are then brought together at the guide member (11), wherein the feeder bands (7, 8a, 8b) are arranged for being rolled up on the storage reel (5) alongside each other and substantially in line with each other.

2. Device according to claim 1, **characterized in that** the feeder bands (7, 8a, 8b) are separated at a distance from each other on the storage reel (5) in a direction parallel with the axis (X-X) of the storage reel.

3. Device according to claim 1 or 2, **characterized in that** the guide member comprises two substantially parallel guide reels (15, 16) arranged substantially parallel with the axis (X-X) of the storage reel.

4. Device according to claims 1-3, **characterized in that** a first drive motor (18) is arranged on the storage reel (5) and a second drive motor (19) is arranged on the at least one buffer reel (9).

5. Device according to any of the preceding claims, **characterized in that** the guide member (11) is arranged to receive two outer substantially parallel guide cylinders (30, 31) substantially parallel with and outside the guide reels (15, 16).

6. Device according to any of the preceding claims, **characterized in that** the guide reels (15, 16) and the outer guide cylinders (30, 31) are designed with tracks (33) running round their axes, which tracks (33) are placed in an area which is not covered by the feeder means (7, 8a, 8b).

7. Device according to any of the preceding claims, **characterized in that** guide elements (34, 35) extending in the longitudinal direction of the feeder means are arranged in the tracks (33) of the guide reels (15, 16) in order to receive the outer guide cylinders (30, 31).

## Patentansprüche

1. Vorrichtung zum Speichern von flexiblen blattartigen Gegenständen (3), wobei die Vorrichtung (1) eine Speichertrommel (5) zum Speichern der flexiblen Gegenstände (3), eine Puffereinrichtung (9) zum Aufnehmen von Förderbändern (7, 8a), wobei die Förderbänder (7, 8a) zwischen der Speichertrommel (5) und der Puffereinrichtung (9) angeordnet sind und auf diese aufgewickelt sein können, und zumindest ein Führungselement (11), das auf den Förderbändern (7, 8a) angeordnet ist, zum Einführen der flexiblen Gegenstände (3), aufweist, **dadurch gekennzeichnet, dass** diese zumindest drei Förderbänder (7, 8a, 8b) aufweist, die Puffereinrichtung zumindest eine Puffertrommel (9) aufweist und dass zumindest ein erstes Förderband (7) von den anderen zweiten Förderbändern (8a, 8b) abgeleitet wird und diese dann am Führungselement (11) zusammengebracht werden, wobei die Förderbänder (7, 8a, 8b) angeordnet sind, um auf die Speichertrommel (5) nebeneinander und im wesentlichen miteinander fluchtend aufgewickelt zu sein.

2. Vorrichtung nach Anspruch 1, **dadurch gekennzeichnet, dass** die Förderbänder (7, 8a, 8b) mit einem Abstand zueinander auf der Speichertrommel (5) in einer Richtung parallel zur Achse (X-X) der Speichertrommel getrennt sind.

3. Vorrichtung nach Anspruch 1 oder 2, **dadurch gekennzeichnet, dass** das Führungselement zwei im wesentlichen parallele Führungstrommeln (15, 16) aufweist, die im wesentlichen parallel zur Achse (X-X) der Speichertrommel angeordnet sind.

4. Vorrichtung nach Anspruch 1 bis 3, **dadurch gekennzeichnet, dass** ein erster Antriebsmotor (18) auf der Speichertrommel (5) angeordnet ist und dass ein zweiter Antriebsmotor (19) auf der zumindest einen Puffertrommel (9) angeordnet ist.

5. Vorrichtung nach einem der vorhergehenden Ansprüche, **dadurch gekennzeichnet, dass** das Führungselement (11) angeordnet ist, um zwei äußere, im wesentliche parallele Führungszylinder (30, 31) aufzunehmen, die im wesentlichen parallel zueinander sind und außerhalb der Führungstrommeln (15, 16) angeordnet sind.

6. Vorrichtung nach einem der vorhergehenden Ansprüche, **dadurch gekennzeichnet, dass** die Führungstrommeln (15, 16) und die äußeren Führungszylinder (30, 31) mit Bahnen (33) versehen sind, die um ihre Achse verlaufen, wobei die Bahnen (33) in einem Gebiet angeordnet sind, das nicht durch die Fördereinrichtung (7, 8a, 8b) bedeckt ist.

7. Vorrichtung nach einem der vorhergehenden Ansprüche, **dadurch gekennzeichnet, dass** die Führungselemente (34, 35), die sich in der Längsrichtung der Fördereinrichtung erstrecken, in den Bahnen (33) der Führungstrommeln (15, 16) angeordnet sind, um die äußeren Führungszylinder (30, 31) aufzunehmen.

## Revendications

1. Dispositif pour stocker des articles en forme de feuilles souples (3), lequel dispositif (1) comprend une roue de stockage (5) pour stocker les articles souples (3) ; des moyens tampons (9) pour recevoir des bandes de dispositif d'avance (7, 8a), lesquelles bandes de dispositif d'avance (7, 8a) sont agencées entre la roue de stockage (5) et les moyens tampons (9) et peuvent être enroulées sur ceux-ci ; et au moins un élément de guidage (11) agencé sur les bandes de dispositif d'avance (7, 8a) pour guider les articles souples (3), **caractérisé en ce qu'**il comprend au moins trois bandes de dispositif d'avance (7, 8a, 8b), les moyens tampons comprennent au moins une roue tampon (9) et **en ce qu'**au moins une première bande de dispositif d'avance (7) est écartée des autres deuxièmes bandes de dispositif d'avance (8a, 8b) et celles-ci sont ensuite rapprochées les unes des autres au niveau de l'élément de guidage (11), dans lequel les bandes de dispositif d'avance (7, 8a, 8b) sont agencées pour être enroulées sur la roue de stockage (5) le long les unes des autres et sensiblement en ligne les unes avec les autres.

2. Dispositif selon la revendication 1, **caractérisé en ce que** les bandes de dispositif d'avance (7, 8a, 8b) sont séparées d'une certaine distance les unes des autres sur la roue de stockage (5) dans une direction parallèle à l'axe (X-X) de la roue de stockage.

3. Dispositif selon la revendication 1 ou 2, **caractérisé en ce que** l'élément de guidage comprend deux roues de guidage sensiblement parallèles (15, 16) agencées sensiblement parallèlement à l'axe (X-X) de la roue de stockage.

4. Dispositif selon les revendications 1 à 3, **caractérisé en ce qu'**un premier moteur d'entraînement (18) est agencé sur la roue de stockage (5) et un deuxième moteur d'entraînement (19) est agencé sur ladite au moins une roue tampon (9).

5. Dispositif selon l'une quelconque des revendications précédentes, **caractérisé en ce que** l'élément de guidage (11) est agencé pour recevoir deux cylindres de guidage extérieurs sensiblement parallèles (30, 31), sensiblement parallèles aux roues de guidage et à l'extérieur de celle-ci. (15, 16).

6. Dispositif selon l'une quelconque des revendications précédentes, **caractérisé en ce que** les roues de guidage (15, 16) et les cylindres de guidage extérieurs (30, 31) comportent des pistes (33) s'étendant autour de leurs axes, lesquelles pistes (33) sont placées dans une zone qui n'est pas recouverte par les moyens d'avance (7, 8a, 8b).

7. Dispositif selon l'une quelconque des revendications précédentes, **caractérisé en ce que** des éléments de guidage (34, 35) s'étendant dans la direction longitudinale des moyens d'avance sont agencés dans les pistes (33) des roues de guidage (15, 16) afin de recevoir les cylindres de guidage extérieurs (30, 31).
